# EUROPEAN PATENT SPECIFICATION

(11) **EP 1 547 351 B1**
(45) Date of publication and mention of the grant of the patent: **09.05.2007**
(21) Application number: 03769298.5
(22) Date of filing: 22.09.2003
(51) Int. Cl.: H04M 1/725, H04Q 7/32

(54) **Method and mechanism for transmitting messages**
Verfahren und Mechanismus zum Übertragen von Nachrichten
Procédé et mécanisme de transmission de messages

(30) Priority: 23.09.2002 US 412901 P; 23.09.2002 US 412756 P; 23.09.2002 US 412902 P; 23.09.2002 US 412769 P; 19.09.2003 US 665834; 19.09.2003 US 666699; 19.09.2003 US 664618
(43) Date of publication of application: 29.06.2005
(73) Proprietor: TELEFONAKTIEBOLAGET LM ERICSSON (publ), 164 83 Stockholm (SE)
(72) Inventor: HANSSON, Jonas, S-222 20 Lund (SE); BJÄRE, Björn, S-226 49 Lund (SE); LE, Chi, Thu, S-226 52 Lund (SE); ISBERG, Lars, S-212 33 Malmö (SE)
(74) Representative: Schwarze, Holm
(86) International application number: PCT/EP2003/010515
(87) International publication number: WO 2004/028125

(56) References cited:
- SILVA-LEPE I ET AL: "CONTAINER-MANAGED MESSAGING: AN ARCHITECTURE FOR INTEGRATING JAVA COMPONENTS AND MESSAGE-ORIENTED APPLICATIONS" PROCEEDINGS OF THE 37TH INTERNATIONAL CONFERENCE ON TECHNOLOGY OF OBJECT-ORIENTED LANGUAGES AND SYSTEMS (TOOLS-PACIFIC 2000), SYDNEY, NSW, AUSTRALIA, 20 - 23 November 2000, pages 228-241, XP010527801
- USUI K ET AL: "DESIGN AND IMPLEMENTATION OF JAVA APPLICATION ENVIRONMENT AND SOFTWARE PLATFORM FOR MOBILE PHONES" NEC RESEARCH AND DEVELOPMENT, NIPPON ELECTRIC LTD. TOKYO, JP, vol. 42, no. 4, October 2001 (2001-10), pages 379-383, XP001092568 ISSN: 0547-051X

## Description

### BACKGROUND OF THE INVENTION

### Technical Field of the Invention

The present invention relates generally to the field of wireless telecommunications and, more particularly, to a system and method for transmitting and receiving messages between first and second software components, such as, for example, application software and a software services component of a platform in a mobile terminal for a wireless telecommunications system.

### Description of Related Art

Since cellular telecommunications systems were first introduced in the 1980s, mobile terminals (Mobile Stations) utilized in the systems have become increasingly more complex. Initially, mobile terminals were designed primarily to provide voice telephony services; i.e., to receive and transmit voice communications. In later years, mobile terminals were developed that also included the ability to transfer user data not related to that of a voice telephone call. Such user data included, for example, data to be transferred over a dial-up networking connection initiated via a personal computer (PC).

Currently, so-called "third generation" (3G) systems are being developed for future mobile telecommunications systems. 3G systems will combine high-speed Internet access with traditional voice communication, and will provide a user with access to Internet browsing, streaming audio/video, positioning, video conferencing and many other capabilities in addition to voice communication.

The Third Generation Partnership Project (3GPP) was established to ensure compatibility among the several 3G systems that are being developed around the world. The Universal Mobile Telephone System (UMTS) is being developed by 3GPP to provide a 3G system that includes terrestrial and satellite systems capable of delivering voice, data and multimedia anywhere in the world.

The drastically increased functionality that is being included in cellular telecommunications systems via the 3GPP standardization has placed substantial demands on the developers of mobile terminals to be used in the systems. This demand is exacerbate by the fact that a mobile terminal is a "resource scarce" environment that is limited in size, memory and power.

Traditionally, mobile terminal manufacturers have designed, fabricated and marketed substantially complete mobile terminal systems that include all the hardware and software needed for basic terminal operation as well as the hardware and software needed to provide the features and capabilities desired by the manufacturer or a particular user based on their perception of market needs. Such an approach does not provide the flexibility to quickly adapt to rapid changes in market demands or to satisfy the diverse requirements of multiple stakeholders.

The article "Container-managed Messaging: An Architecture for Integrating Java Components and Message-Oriented Applications", by Ignacio Silva-Lepe et al., Proceedings of the 37^{th} International Conference on Technology of Object-Oriented Languages and Systems (TOOLS-PACIFIC 2000), Sydney, NSW, Australia, 20-23 November 2000, pages 228-241, discloses an approach called container-managed messaging for integrating components that use object-oriented middleware and components that use message-oriented middleware.

Recognizing the inadequacies of traditional procedures for designing and fabricating mobile terminals, a mobile terminal platform assembly has been developed that includes a plurality of functionally complementary units of software and hardware that can be marketed as a unit to a plurality of users. Each user can then install, load, and run his own application software into the assembly to provide a tailored platform system for a mobile terminal that meets the user's own particular needs. The mobile terminal platform assembly and the platform system are described in detail in commonly assigned U.S. Patent Application Serial Nos. 10/359,911 and 10/359,835, the disclosures of which are hereby incorporated by reference.

A platform system such as described above, wherein mobile terminal platform assembly software and application software are developed separately and then later combined by installing, loading, and running the application software in the mobile terminal platform assembly, requires that result messages originating from a service request, which may also include delivery of event information, be transmitted from software in the platform assembly to an application via an interface in the platform assembly. Such messages may be transmitted using either a stack/procedure-based approach (i.e., callback mode), or a serial-based approach (i.e., full message mode).

The callback mode is a simple and well-proven technique that allows an application to focus on application specific functionality and leave basic and complex mechanism-related handling to the platform or framework. The software developer has the possibility to route messages directly to a handler of the result (function/procedure/method). For example, the developer/user may initiate a user interface application where, e.g., a Window Manager passes messages holding information of the user interaction events or messages to well-defined handlers. The invocation of the user code is completely determined by the Window Manager. The value-added functionality is accessible or available to the developer, whereas the message loop and the freeing of messages are not viewable to the user. Thus, the developer is not required to route the different messages to dedicated parts of the program and the developer cannot degrade the system. Therefore, in callback mode, the application code has no control in terms of when, and in what order, to process a certain message. In some circumstances, the application may need to control the order in which messages are processed, or the time at which a specific message is processed (i.e., priority handling).

Accordingly, another technique, denoted the full message mode, may be utilized as an alternative to the callback mode. The full message mode queues messages at, for example, an application thread. The queued messages then await processing by the application. The queued messages may be processed in an ordered manner, such as in a FIFO technique, or the queued messages may be processed in parallel or in a prioritized manner. In this case, the application code has complete control of the message loop.

Current solutions, such as those incorporated into PalmOS and Brew environments, allow a user to use either the callback mode or the full message mode, but the user or application software is not free to choose the mode in which to receive incoming messages. The callback or full message mode is predetermined for the application.

There is, accordingly, a need for a message model that offers the user (application software) the choice of receiving messages either via the callback mode or the full message mode. The user may choose which message mode best suits the problem individually at each different instance.

### SUMMARY OF THE INVENTION

In an embodiment of the invention, a system for transmitting messages between a platform domain and an application domain for a product includes a platform domain having a software component and an interface component. The interface component has at least one interface for providing an application or a module in the application domain with access to the software component, and a message transmitting mechanism for transmitting messages between the platform domain and the application domain via the interface. The message transmitting mechanism includes a message model for allowing an application or another module in the application domain to select or switch between either a callback mode or a full message mode for receiving messages from the platform domain. The message transmitting model also includes a message handler for routing messaging according to the selected mode.

In another embodiment of the invention, a platform domain has a software component and an interface component having at least one interface for providing an application or a module in an application domain with access to the software component. A method of transmitting messages between an application domain and a platform domain includes the application or the module in the application domain selecting either a callback mode or a full message mode or switching between the callback mode and the full message mode. The modes are for receiving messages from the platform domain. A message handler routes messaging according to the selected mode.

A message transmitting mechanism for transmitting messages between first and second software components includes a message model for allowing one of the first and second software components to select either a callback mode or a full message mode or switch between the callback mode and the full message mode, the modes being for receiving messages between the first and second software components. The mechanism also includes a message handler for routing messaging according to the selected mode.

Further advantages and specific details of the present invention will become apparent hereinafter from the detailed description given below in conjunction with the following drawings.

### BRIEF DESCRIPTION OF THE DRAWINGS

FIGURE 1 is a block diagram that schematically illustrates a platform system for a mobile terminal for a wireless telecommunications system to assist in explaining principles of the present invention;
FIGURE 2 is a block diagram that schematically illustrates a deployment view of the mobile terminal platform assembly of the platform system of FIGURE 1 to further assist in explaining principles of the present invention;
FIGURE 3 is a block diagram that schematically illustrates the software architecture of the mobile terminal platform assembly of FIGURES 1 and 2 to further assist in explaining principles of the present invention;
FIGURE 4 is a block diagram that schematically illustrates details of the middleware services layer of FIGURES 1-3 to further assist in explaining principles of the present invention;
FIGURE 5 is a block diagram that schematically illustrates details of the OPA domain of the middleware services layer of FIGURE 4 in accordance with principles of the present invention;
FIGURE 6 is a block diagram that schematically illustrates the signaling and the components utilized in controlling full message mode or callback mode in accordance with principles of the present invention; and
FIGURE 7 is a flow diagram that illustrates invoking of full message mode or callback mode in accordance with principles of the present invention.

### DETAILED DESCRIPTION OF THE EXEMPLARY EMBODIMENTS OF THE INVENTION

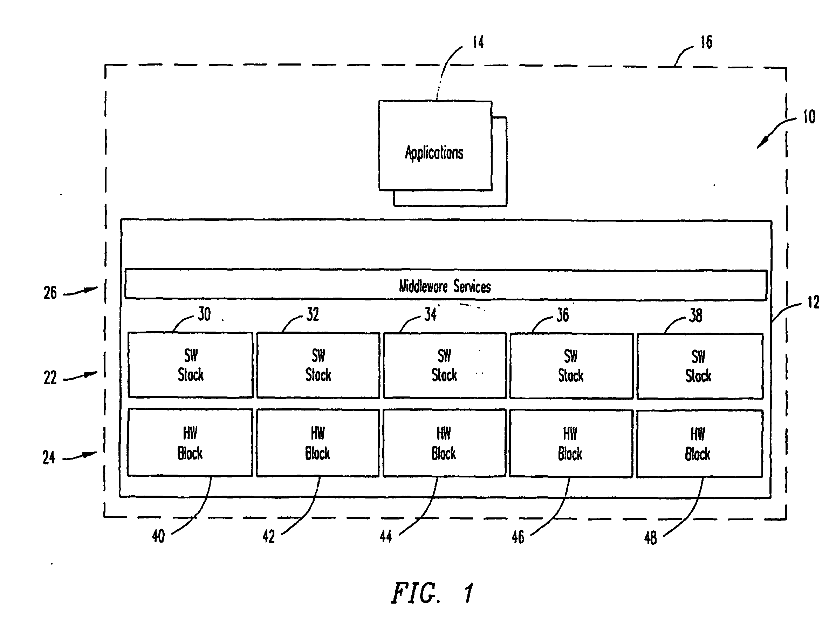

FIGURE 1 is a block diagram that schematically illustrates a platform system for a mobile terminal for a wireless telecommunications system to assist in explaining principles of the present invention. The platform system is generally designated by reference number 10 and includes a mobile terminal platform assembly 12 and one or more applications (i.e., application software) 14 that have been installed, loaded and run in the mobile terminal platform assembly. Platform system 10 is adapted to be incorporated in a mobile terminal generally designated by dotted line 16.

Mobile terminal platform assembly 12 includes a software services component 22, a hardware component 24 and an interface component 26. Software services component 22 includes a plurality of well-structured functional software units for providing services that are offered to users via the interface component 26. Users include platform users (e.g., phone manufacturers) and end users (e.g., telephone users). In the exemplary system illustrated in FIGURE 1, the plurality of software units include a plurality of vertically-oriented functional software stacks 30-38.

The hardware component 24 includes a set of hardware units that are associated with and controlled by their respective functional software stacks. In the exemplary system illustrated in FIGURE 1, the hardware units are different hardware blocks 40-48 associated with the software stacks 30-38.

The interface component 26 includes a middleware services layer that includes at least one application programming interface (API) for installing, loading and running one or more applications 14 in mobile terminal platform assembly 12 that isolates the mobile terminal platform assembly 12 from the applications using the mobile terminal platform assembly 12 and provides various other services for the applications 14. Specific details of the middleware services layer will be described hereinafter.

Mobile terminal platform assembly 12, at a later time in order to expand the functionality of platform system 10, is adapted to be designed, implemented (assembled) and tested as a complete, enclosed unit separate from the application software 14 (the term "application software" as used herein can be any software that provides the functionality that users may wish to have available). Mobile terminal manufacturers and other parties with development capacity can, accordingly, develop or otherwise acquire their own application software and add that software to the mobile terminal platform assembly 12 at a later time in order to tailor the platform system 10. Mobile terminal platform assembly 12 can, accordingly, be sold or otherwise transferred to a plurality of different users each of which can tailor the platform system 10 by installing, loading and running their own application software in the assembly in order to satisfy their own particular requirements for the platform system.

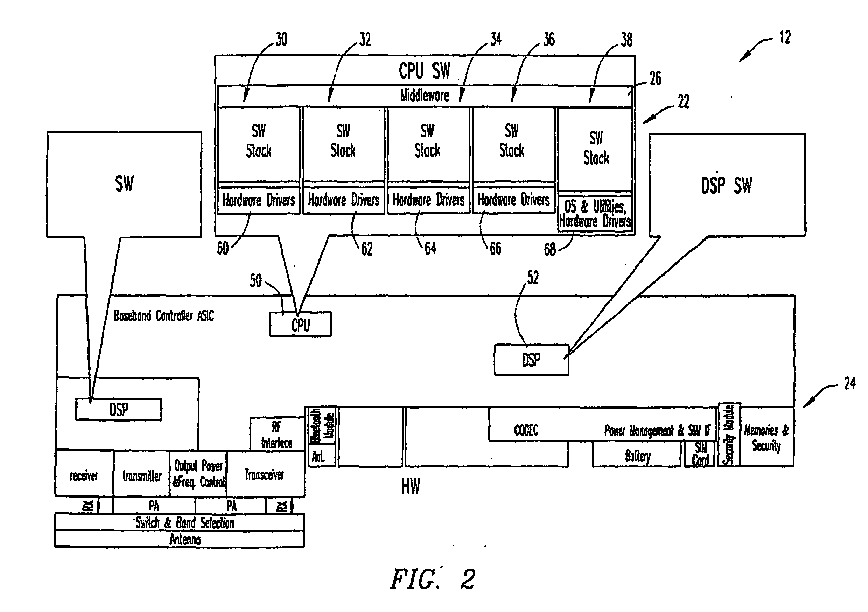

FIGURE 2 is a block diagram that schematically illustrates one example of a deployment view of mobile terminal platform system 12 of FIGURE 1 to further assist in understanding principles of the present invention. As illustrated in FIGURE 2, mobile terminal platform assembly 12 is controlled via software executing in a main CPU 50. The main CPU 50 may include one or more processors such as microprocessors, micro programmable processors or DSPs (Digital Signal Processors). The software stacks 30-38 of software services component 22 each include hardware driver software 60-68 to operate the hardware units associated with each stack. Further details of the mobile terminal platform assembly 12 and platform system 10 are given in the above-mentioned commonly-assigned U.S. Patent Application Serial No.

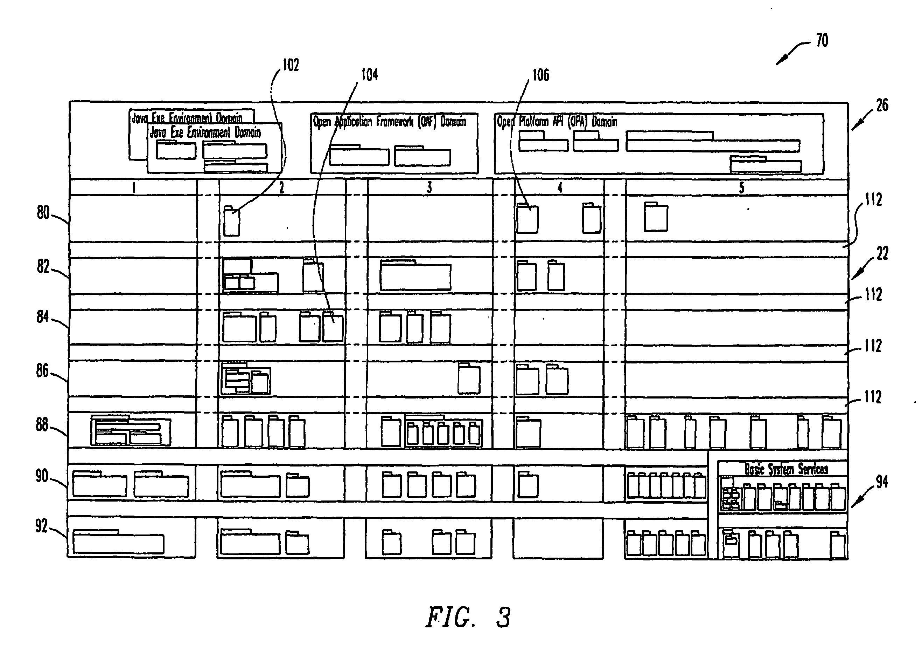

The software incorporated in mobile terminal platform assembly 12 is preferably arranged in such a manner as to make the software organization easy to understand so that it can be more easily designed and more easily upgraded or otherwise modified. FIGURE 3 is a block diagram that schematically illustrates the software architecture of mobile terminal platform assembly 12 to further assist in explaining principles of the present invention.

As shown in FIGURE 3, software services component 22, in addition to being organized into a plurality of vertical, functional software stacks as described above, is also arranged to define a plurality of horizontal layers such that the software of the middleware services layer and the software of the software services component 22 together define a layered architecture, generally designated by reference number 70, in which the layers are arranged in descending order from a higher level service layer to a lower level service layer.

The software architecture differs from the standard ISO/OSI (ISO Open Systems Interconnection) model in that it includes a plurality of horizontally partitioned functional software units that complement a plurality of vertically partitioned software layers. The horizontal partitioning contributes significantly to the creation of independent modular (service) components.

The highest layer of the layered architecture is the middleware services layer. The layers of the software services component 22 include an application server layer 80 to provide application services, a platform services layer 82 to provide platform specific services for applications, a platform protocol layer 84 to provide session protocols and application specific protocols, a transport layer 86 to provide audio access/control, datacom transport protocols, messaging transport protocols and the like, a data access layer 88 to provide external data IF access, structured storage services and other low level platform support services, a logical drivers layer 90 and a physical drivers layer 92 encapsulating hardware dependencies. In addition, software services component 22 includes basic system services layers 94 that provide general services that are needed by the platform assembly.

The bottom two layers 90 and 92 constitute Hardware Abstraction Layers (HAL) which isolate the dependencies between the software and the hardware. Only the physical drivers layer is concerned with the details of the hardware (i.e., which registers in the ASIC hardware are addressed). The logical drivers layer 90 provides a logical mapping to the hardware, i.e., this layer provides a bridge between the hardware and software parts of the mobile terminal platform assembly 12.

The software itself is organized into a plurality of software modules, modules 102, 104, and 106 being specifically indicated in FIG. 3. In software services component 22, a single module can reside in only one vertical functional stack and in only one horizontal layer within that stack. Each layer can contain from one to many modules, and all the modules in a particular layer in a particular stack have the same level of abstraction. Communication among the various modules is accomplished via a Software Back Plane (SwBP) 112 subject to a set of basic rules for software module-to-module access. These rules can be summarized as follows:
- A software module may invoke functionality in all layer interfaces below its own layer.
- There are no limitations for the direction of serialized data flows. They may go in any direction.
- A software module may never invoke functionality in layer interfaces (in the SwBP 112) above its own layer, independent of to which module the layers belong.
- A software module may invoke functionality in the layer interface in its own layer in the same vertical stack.
- A software module may invoke functionality in a software module in the same layer in another vertical stack. (This capability is permitted to limit the number of layers in the vertical stacks.)

There is no hard coupling between the various modules and the interfaces in the SwBP 112. As a result, the modules and/or the implementation of the interfaces can be freely changed without any impact on the clients to the interfaces. This is an important capability as it permits individual modules to be added, removed or changed without affecting other modules in the platform assembly.

Further details of the layered architecture, including the SwBP software structure that
enables the internal communication between modules within the mobile terminal platform assembly are described in the above-mentioned commonly assigned U.S. Patent Application Serial No. 10/359,911.

The middleware services layer functions to provide a well-defined interface between the software in the mobile terminal platform assembly 12 and the application software 14 to be installed, loaded, and run in the platform assembly. In addition, the middleware services layer encapsulates the mobile terminal platform assembly 12, isolates the assembly from applications 14 via the middleware services layer, and provides various other services for the applications 14.

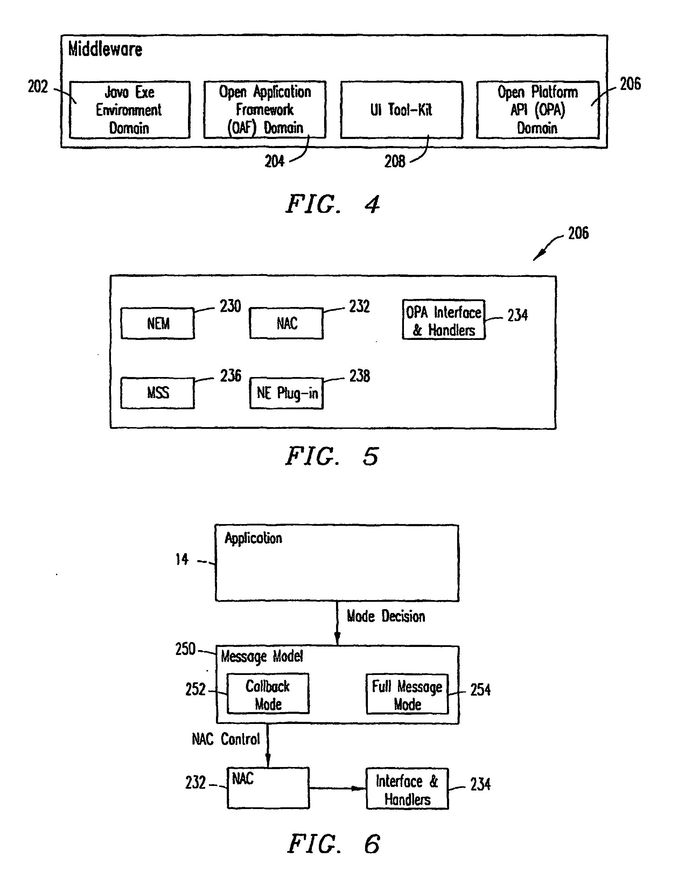

FIGURE 4 is a block diagram that schematically illustrates details of middleware services layer. As shown in FIGURE 4, the middleware services layer includes a plurality of API domains including non-native environments e.g. the Java Execution (Java ExE) Environment API domain 202, Open Application Framework (OAF) API domain 204, Open Platform API (OPA) domain 206 and UI Tool-kit API domain 208.

Through the APIs in the middleware services layer, the mobile terminal platform assembly 12 supports a plurality of application environments. In FIGURE 4, middleware services layer supports environments for native applications (i.e., applications that are compiled to run with a particular processor and its set of instructions) and for non-native applications such as, for example, Java J2ME CLDC/MIDP (Java 2 Micro Edition Connected Limited Device Configuration/Mobile Information Device Profile) applications. Each application environment has its own characteristics and is defined as:
-- The way applications are developed (programming language support, compilation and linkage).
-- The way applications are executed (e.g., interpretation or native code execution)
-- The functional services that are offered.
-- Potential restrictions in use.
By providing multiple application environment alternatives, a wide range of products
with varying demands such as cost, ease of use, time to market, functionality set, size, portability, etc. is facilitated.

Further details of the middleware services layer are described in commonly assigned, U.S. Patent Application Serial No. 10/359,772, the disclosure of which is hereby incorporated by reference.

FIGURE 5 is a block diagram that schematically illustrates the major software modules of the Open Platform (OPA) domain 206 in accordance with principles of the present invention. As illustrated, the OPA domain 206 includes five modules: a Native Environment Management (NEM) module 230; a Native Application Core (NAC) module 232; an OPA Interface and Handlers module 234; a Middleware Support Services module 236; and a Native Extension Plug-in module(s) 238. The Native Environment Management module 230 has the responsibility of controlling native applications in platform system 10 and is the recipient of the control commands concerning native applications from an Application Manager and keeps track of native applications that are currently running in the system. The Middleware Support Services module 236 provides services to the OPA domain 206 that are common for the different handlers or that need to be centralized such as, for example, object management and resource supervision.

The Native Extension Plug-in module(s) 238 can be seen as an optional extension of the platform assembly functionality through the OPA Interface and Handlers module 234. The NE plug-in module(s) 238 are subject to the same interface guidelines, paradigms and mechanisms that rule and apply to the OPA Interface and Handlers module 234. The OPA Native Extension Plug-in module(s) 238 access the platform functionality through the OPA Interface and Handlers module 234.

The Native Application Core module 232 administers and takes care of the threading and message handling complexities that the applications would otherwise have to handle themselves. It also serves the purpose of achieving OS independence by hiding the implementation details of the OS for relieving applications from run-time complexities including message routing/filtering and message-related resource handling. A major responsibility of the Native Application Core module 232 is to hide the details of the startup and shutdown phase of an application 14 and in the handling of messages.

FIGURE 6 illustrates the components and signaling involved in an application 14 utilizing either the callback mode or the full message mode for receiving messages from the software services component 22 of the platform assembly 12 via middleware services layer, in accordance with principles of the invention. A message model 250 allows an application 14 to choose between callback mode 252 or full message mode 254 dependent on what is most beneficial for the current operations and situation of the application 14. Once application 14 has entered the desired mode, the message model 250 initiates the signaling conventions associated with the chosen mode, namely callback mode 252 or full message mode 254. The NAC module 232 is aware of the chosen mode and handles the messages according to the requisite signaling convention.

If the application 14 chooses to enter the callback mode 252, NAC module 232 directs messages to the appropriate handler in the OPA Interface and Handlers module 234, which then formats messages according to the callback mode. In callback mode 252, the software developer has the possibility to receive the result directly in a function/procedure/method, such as a general function or a dedicated function. The callback mode 252 is entered when the application 14 returns execution control to the middleware services layer after the execution of a callback. Once the application 14 returns control to the middleware services layer, it is possible to trigger other callback functions. However, during execution of a callback function, other messages may be processed by the application 14 by using the full message mode 254.

If the application 14 chooses to enter the full message mode 254, NAC module 232 directs messages to the appropriate application message queue according to the full message mode 254. The software developer now has complete control of the message loop. The full message mode 254 is the default mode and is active when the application 14 is in control of its own thread. In this case the application 14 might choose to poll the message queue via an explicit request to the middleware services layer at any time. Several options are available for receiving messages in full message mode 254. For example, the user or the software developer may choose to request that the calling thread is blocked, optionally with timeout, until a message is available or check for messages without blocking the thread. Also, a filter parameter may be used, thereby making it possible to respond to messages in a certain order, filtering out less important ones for later processing. In full message mode 254, the application code is responsible for freeing a message. The application 14 may thus in certain situations choose to forward a received message to another application 14, without the need to free and allocate the message again, which improves performance.

When switching to callback mode 252 from full message mode 254, the software developer allows software of the middleware services layer to invoke the proper callback functions. In addition, application 14 may change between callback mode 252 and full message mode 254 at any time, even in real time. Therefore, the application 14 has the ability to choose at any time the message reception mode best suited to each individual problem. The callback mode 252 and the full message mode 254 may co-exist in any combination of software entities in the application software domain.

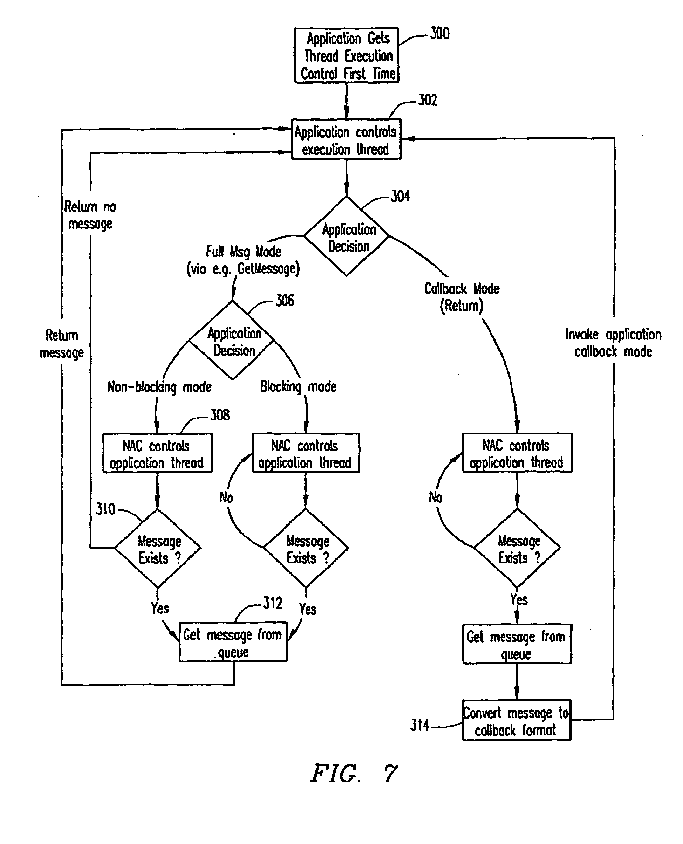

FIGURE 7 is a flow diagram that illustrates invoking of full message mode or callback mode in accordance with principles of the present invention. At step 300, an application 14 gets control over its main thread for the first time since startup of the system. The application 14 will retain this control, indicated by step 302, until the application 14 decides to wait for a message from the middleware services layer. The application 14 will then make a decision 304 whether to wait for the message in callback mode or full message mode. If the decision is callback mode, the application 14 will execute a return statement, which transfers the control of the application thread to the NAC module 232, indicated by 307. The NAC module 232 will then poll the message queue of this thread for existing messages indicated by 309. The NAC module 232 will keep polling the queue until a message is found (311, 313), upon which it will convert the message to callback format (314) and invoke a callback method previously specified by the application 14 in order to handle the message. This completes the loop and the application 14 may again make a decision indicated by 304 as to whether the application 14 will enter callback or full message mode.

If full message mode is chosen, the application 14 has to decide whether to enter in blocking or non-blocking mode, as indicated by 306. The application 14 will do so by requesting a message from the OPA Interface and Handlers module 234 in the middleware services layer. The type of request will also indicate whether the request should be non-blocking or blocking. If a non-blocking request is issued, the request transfers the control of the application thread to the NAC module 232, indicated by 308. The NAC module 232 will then poll the message queue of this thread for the existence of a message according to the specification of the request (310). If a matching message is found, then this message will be removed from the message queue (31.2) and returned to the application 14. If no message is found, the NAC module 232 will return the control of the thread to the application 14 without passing any message. This completes the loop and the application 14 may again make a decision indicated by 304 as to whether the application 14 will enter callback or full message mode.

If full message mode is chosen, the application 14 again has to decide whether to enter in blocking or non-blocking mode, as indicated by 306. As previously described for non-blocking mode, the application 14 will do so by requesting a message from the OPA Interface and Handlers module 234 in the middleware services layer. The type of request will again indicate whether the request should be non-blocking or blocking. If a blocking request is issued, the request transfers the control of the application 14 thread to the NAC, indicated by 305. The NAC module 232 will then poll the message queue (315) of this thread for the existence of a message according to the specification of the request. If no message is found, the NAC module 232 will continue to poll the message queue for the requested message(s), until one is found or a potential specified timeout period is exceeded. As soon as a matching message is found, then this message will be removed from the message queue (312) and returned to the application 14. This completes the loop and the application 14 may again make a decision indicated by 304 as to whether it will enter callback or full message mode.

While what has been described constitute exemplary embodiments of the invention, it should be understood that the invention can be varied in many ways without departing from the scope thereof. For example, although the present invention has been described primarily in connection with the transmission of messages in a particular platform system for a mobile terminal for a wireless telecommunications system, the invention can also be used in connection with the transmission of messages in other platforms for mobile terminals, and in platforms for other products. Because the invention can be varied in many ways, it should be recognized that the invention should be limited only insofar as is required by the scope of the following claims.

## Claims

1. A system for transmitting messages between a platform domain (12) and an application domain (14) for a product, the system comprising:
a platform domain (12) having a software component (22) and an interface component (26) the interface component having at least one interface for providing an application or a module in the application domain with access to the software component, and a message transmitting mechanism as defined in claim 13 for transmitting messages between the platform domain and the application domain via the interface; the message transmitting mechanism including:
a message model (250) for allowing an application or another module in the application domain to select or switch between either a callback mode (252) or a full message mode (254) for receiving messages from the platform domain;
a message handler (232, 234) for routing messaging according to the selected mode; and
wherein the application or the module in the application domain may switch between the callbadk mode and the full message mode at any time.

2. The system according to claim 1, wherein the message handler is included in the platform domain.

3. The system according to claim 2, wherein:
the interface comprises a middleware services layer; and
the message handler comprises a Native Application Core module that acts as a router included in the middleware services layer.

4. The system according to claim 3, wherein the Native Application Core module is included in an Open Platform API (OPA) domain of the middleware services layer.

5. The system according to claim 1, wherein support for the message model is included in the Platform domain and controlled by the modules in the application domain.

6. The system according to claim 1, wherein, if the callback mode is Selected the callback mode is entered by the application returning execution control to the message handler after the invocation of a callback function/procedure/method.

7. The system according to claim 1, wherein if the full message mode is selected, the full message mode is entered by the application keeping the execution control after the invocation of a callback function/procedure/method and polling the message handler for queued messages.

8. The system according to claim 1, wherein the platform domain comprises a platform for a mobile terminal for a wireless telecommunications system.

9. A method of transmitting messages between an application domain (14) and a platform domain (12), the platform domain having a software component (22) and an interface component (26) having at least one interface for providing an application (14) or a module in the application domain with access to the software component, the method comprising:
the application or the module in the application domain selecting either a callback mode (252) or a full message mode (254) or switching between the callback mode and the full message mode, the modes being for receiving messages from the platform domain;
a message handler (232, 234) routing messaging according to the selected mode; **characterized in that**
the application or the module in the application domain switching between the callback mode and the full message mode at any time.

10. The method according to claim 9, wherein, if the callback mode is selected, the method further includes the step of entering the callback mode by the application returning execution control to the message handler after the invocation of a callback function/procedure/method.

11. The method according to claim 9, wherein if the full message mode is selected, the method further includes the step of entering the full message mode by the application keeping the execution control after the invocation of a callback function/procedure/method and polling the message handler for queued messages.

12. The method according to claim 9, wherein the platform domain comprises a platform for a mobile terminal for a wireless telecommunications system.

13. A message transmitting mechanism for transmitting messages between first and second software components (12, 14), the message transmitting mechanism comprising:
a message model (250) for allowing one of the first and second software components to select either a callback mode (252) or a full message mode (254) or switch between the callback mode and the full message mode, the modes being for receiving messages between the first and second software components;
a message handler (232, 234) for routing messaging according to the selected mode; **characterised in that** one of the first and second software components may switch between the callback mode and the full message mode at any time.

14. The mechanism according to claim 13, wherein the second software component is in a platform domain that includes an interface component comprising an interface for providing the first software component with access to the second software component, and wherein the message handler is included in the interface component.

15. The mechanism according to claim 14, wherein:
the interface component comprises a middleware services layer;
the message handler comprises a Native Application Core module included in the middle ware services layer; and
the Native Application Core module is adapted to act as a router.

16. The mechanism according to claim 15, wherein the Native Application Core module is included in an Open Platform API (OPA) domain of the middleware services layer.

17. The mechanism according to claim 13, wherein support for the message model is included in the platform domain and controlled by the modules in the application domain.

18. The mechanism according to claim 13, wherein, if the callback mode is selected, the callback mode is entered by the application returning execution control to the message handler after the invocation of a callback function/procedure/method.

19. The mechanism according to claim 13, wherein if the full message mode is selected, the full message mode is entered by the application keeping the execution control after the invocation of a callback function/procedure/method and polling the message handler for queued messages.

20. The mechanism according to claim 14, wherein the Platform domain comprises a platform for a mobile terminal for a wireless telecommunications system.

## Patentansprüche

1. System zum Senden von Nachrichten zwischen einer Plattformdomäne (12) und einer Anwendungsdomäne (14) für ein Produkt, wobei das System Folgendes umfasst:
eine Plattformdomäne (12) mit einer Software-Komponente (22) und einer Schnittstellen-Komponente (26), wobei die Schnittstellen-Komponente wenigstens eine Schnittstelle besitzt, um einer Anwendung oder einem Modul in der Anwendungsdomäne einen Zugriff auf die Software-Komponente zu ermöglichen, und mit einem Nachrichtensendemechanismus wie in Anspruch 13 definiert, um Nachrichten zwischen der Plattformdomäne und der Anwendungsdomäne über die Schnittstelle zu senden; wobei der Nachrichtensendemechanismus Folgendes beinhaltet:
ein Nachrichtenmodeil (250), um es einer Anwendung oder einem anderen Modul in der Anwendungsdomäne zu ermöglichen, für das Empfangen von Nachrichten von der Platlformdomäne entweder einen Rückruf-Modus (252) oder einen Vollnachrichten-Modus (254) auszuwählen oder dazwischen umzuschalten;
eine Nachrichten-Handhabungskomponente (232, 234) zum Routen von Nachrichtenkommunikation gemäß dem ausgewählten Modus;
wobei die Anwendung oder das Modul in der Anwendungsdomäne zu jeder Zeit zwischen dem Rückruf-Modus und dem Vollnachrichten-Modus umschalten kann.

2. System gemäß Anspruch 1, **dadurch gekennzeichnet, dass** die Plattformdomäne die Nachrichten-Handhabungskomponente beinhaltet.

3. System gemäß Anspruch 2, **dadurch gekennzeichnet:**
**dass** die Schnittstelle eine Mittelware-Serviceschicht umfasst; und
**dass** die Nachrichten-Handhabungskomponente ein originäres Anwendungskern-("Native Application Core") Modul umfasst, welches als ein in der Mittelware-Serviceschicht enthaltener Router fungiert.

4. System, dass gemäß Anspruch 3, **dadurch gekennzeichnet, dass** das originäre Anwendungskern-Modul in einer Offenplattform-Anwendungsprogrammschnittstellen-(Open Platform API/OPA) Domäne der Mittelware-Serviceschicht enthalten ist.

5. System gemäß Anspruch 1, **dadurch gekennzeichnet, dass** in der Plattformdomäne eine Unterstützung für das Nachrichtenmodul enthalten und durch die Module in der Anwendungsdomäne gesteuert ist.

6. System gemäß Anspruch 1, **dadurch gekennzeichnet, dass** dann, wenn der Rückruf-Modus ausgewählt ist, die Anwendung in den Rückruf-Modus übergeht, welche die Ausführungssteuerung der Nachrichten-Handhabungskomponente nach dem Aufruf einer(s) Rückruffunktion/-prozedur/-verfahrens zurückgibt.

7. System gemäß Anspruch 1, **dadurch gekennzeichnet, dass** dann, wenn der Vollnachrichten-Modus ausgewählt ist, die Anwendung in den Vollnachrichten-Modus übergeht, welche die Ausführungssteuerung nach dem Aufruf einer(s) Rückruffunktion/-prozedur/-verfahrens behält und welche die Nachrichten-Handhabungskomponente bezüglich in einer Warteschlange eingereihter Nachrichten abfrägt.

8. System gemäß Anspruch 1, **dadurch gekennzeichnet, dass** die Plattformdomäne eine Plattform für ein mobiles Endgerät für ein drahtloses Telekommunikationssystem umfasst.

9. Verfahren zum Senden von Nachrichten zwischen einer Anwendungsdomäne (14) und einer Plattformdomäne (12), wobei die Plattformdomäne eine Software-Komponente (22) und eine Schnittstelle-Komponente (26) besitzt, die wenigstens eine Schnittstelle besitzt, um einer Anwendung (14) oder einem Modul in der Anwendungsdomäne Zugriff auf die Software-Komponente zu ermöglichen, wobei das Verfahren Folgendes umfasst:
die Anwendung oder das Modul in der Anwendungsdomäne, die/das entweder einen Rückruf-Modus (252) oder einen Vollnachrichten-Modus (259) auswählt oder zwischen dem Rückruf-Modus oder dem Vollnachrichten-Modus umschaltet, wobei die Modi zum Empfangen von Nachrichten von der Plattformdomäne vorgesehen sind;
eine Nachrichten-Handhabungskomponente (232, 234), welche Nachrichtenkommunikation gemäß dem ausgewähltem Modus routet;
**dadurch gekennzeichnet, dass**
die Anwendung oder das Modul in der Anwendungsdomäne zu jeder Zeit zwischen dem Rückruf-Modus und dem Vollnachrichten-Modus umschaltet.

10. Verfahren gemäß Anspruch 9, **dadurch gekennzeichnet, dass** dann, wenn der Rückruf-Modus ausgewählt ist, das Verfahren ferner den Schritt des Übergangs in den Rückruf-Modus durch die Anwendung umfasst, welche die Ausführungssteuerung der Nachrichtenhandhabungskomponente nach dem Aufruf einer(s) Rückruffunktion/-prozedur/-verfahrens zurückgibt.

11. Verfahren gemäß Anspruch 9, **dadurch gekennzeichnet, dass** dann, wenn der Vollnachrichten-Modus ausgewählt ist, das Verfahren ferner den Schritt des Übergangs in den Vollnachrichten-Modus durch die Anwendung beinhaltet, welche die Ausführungsteuerung nach dem Aufruf einer(s) Rückruffunktion/-prozedur/-verfahrens behält und die Nachrichten-Handhabungskomponente bezüglich in einer Warteschlange eingereihter Nachrichten abfrägt.

12. Verfahren gemäß Anspruch 9, **dadurch gekennzeichnet, dass** die Plattformdomäne eine Plattform für ein mobiles Endgerät für ein drahtloses Kommunikationssystem umfasst.

13. Nachrichtensendemechanismus zum Senden von Nachrichten zwischen einer ersten und einer zweiten Software-Komponente (12, 14) wobei der Nachrichtensendemechanismus Folgendes umfasst:
Softwareein Nachrichtenmodell (250), um es der ersten und der zweiten/Komponente zu gestatten, entweder einen Rückruf-Modus (252) oder einen Vollnachrichtenmodus (254) auszuwählen oder zwischen dem Rückruf-Modus und dem Volinachrichten-Modus umzuschalten, wobei die Modi für das Empfangen von Nachrichten zwischen der ersten und der zweiten Software-Komponente vorgesehen sind;
eine Nachrichten-Handhabungskomponente (232, 234) zum Routen von Nachrichtenkommunikation gemäß dem ausgewählten Modus;
**dadurch gekennzeichnet, dass** eine der ersten und zweiten Software-Komponente zu jeder Zeit zwischen dem Rückruf-Modus und dem Vollnachrichten-Modus umschalten kann.

14. Mechanismus gemäß Anspruch 13, **dadurch gekennzeichnet, dass** die zweite Software-Komponente sich in einer Plattformdomäne befindet, die eine Schnittstellen-Komponente beinhaltet, welche eine Schnittstelle umfasst, um der ersten Software-Komponente Zugriff auf die zweite Software-Komponente zu ermöglichen, und wobei die Nachrichten-Handhabungskomponente in der Schnittstelle-Komponente enthalten ist.

15. Mechanismus gemäß Anspruch 14, **dadurch gekennzeichnet:**
**dass** die Schnittstelle-Komponente eine Mittelware-Serviceschicht umfasst;
**dass** die Nachrichten-Handhabungskomponente ein originäres Anwendungskern-("Native Application Core") Modul umfasst, das in der Mittelware-Serviceschicht enthalten ist; und
**dass** das originäre Anwendungskern-Modul ausgebildet ist, um als ein Router zu fungieren.

16. Mechanismus gemäß Anspruch 15, **dadurch gekennzeichnet, dass** das originäre Anwendungskern-Modul in einer Offenplatlform-Anwendungsprogrammschnittstellen-(Open Platform API/OPA) Domäne der Mittelware-Serviceschicht enthalten ist.

17. Mechanismus gemäß Anspruch 13, **dadurch gekennzeichnet, dass** in der Plattformdomäne eine Unterstützung für das Nachrichtenmodell enthalten ist und durch die Module in der Anwendungsschicht gesteuert ist.

18. Mechanismus gemäß Anspruch 13, **dadurch gekennzeichnet, dass** dann, wenn der Rückruf-Modus ausgewählt ist, die Anwendung in den Rückruf-Modus übergeht, welche die Ausführungssteuerung der Nachrichten-Handhabungskomponente nach dem Aufruf einer(s) Rückruffunktion/-prozedur/-verfahrens zurückgibt.

19. Mechanismus gemäß Anspruch 13, **dadurch gekennzeichnet, dass** dann, wenn der Vollnachrichten-Modus ausgewählt ist, die Anwendung in den Vollnachrichten-Modus übergeht, welche die Ausführungssteuerung nach dem Aufruf einer(s) Rückruffunktion/-prozedur/-verfahrens behält und welche die Nachrichten-Handhabungskomponente bezüglich in einer Warteschlange eingereihter Nachrichten abfrägt.

20. Mechanismus gemäß Anspruch 14, **dadurch gekennzeichnet, dass** die Plattformdomäne eine Plattform für ein mobiles Endgerät für ein drahtloses Telekommunikationssystem umfasst.

## Revendications

1. Système pour transmettre des messages entre un domaine de plate-forme (12) et un domaine d'application (14) pour un produit, le système comprenant :
un domaine de plate-forme (12) ayant un composant de logiciel (22) et un composant d'interface (26), le composant d'interface ayant au moins une interface pour permettre à une application ou un module dans le domaine d'application d'accéder au composant de logiciel, et un mécanisme de transmission de messages comme défini dans la revendication 13, pour transmettre des messages entre le domaine de plate-forme et le domaine d'application par l'intermédiaire de l'interface ; le mécanisme de transmission de messages incluant :
un modèle de message (250) pour permettre à une application ou un autre module dans le domaine d'application d'effectuer une sélection ou une commutation entre un mode de rappel (252) ou un mode de message intégral (254) pour recevoir des messages provenant du domaine de plate-forme ;
un gestionnaire de messages (232, 234) pour effectuer le routage de messagerie conformément au mode sélectionné ; et
dans lequel l'application ou le module dans le domaine d'application peut commuter à tout moment entre le mode de rappel et le mode de message intégral.

2. Système selon la revendication 1, dans lequel le gestionnaire de messages est inclus dans le domaine de plate-forme.

3. Système selon la revendication 2, dans lequel :
l'interface comprend une couche de services de logiciel médiateur ; et
le gestionnaire de messages comprend un module de Noyau d'Applications Natives qui fonctionne comme un routeur inclus dans la couche de services de logiciel médiateur.

4. Système selon la revendication 3, dans lequel le module de Noyau d'Applications Natives est inclus dans un domaine Open Platform API (OPA) de la couche de services de logiciel médiateur.

5. Système selon la revendication 1, dans lequel le support pour le modèle de message est inclus dans le domaine de plate-forme et est commandé par les modules dans le domaine d'application.

6. Système selon la revendication 1, dans lequel, si le mode de rappel est sélectionné, l'entrée dans le mode de rappel a lieu par le fait que l'application retourne la commande d'exécution au gestionnaire de messages après l'invocation d'une fonction / procédure / méthode de rappel.

7. Système selon la revendication 1, dans lequel si le mode de message intégral est sélectionné, l'entrée dans le mode de message intégral a lieu par le fait que l'application conserve la commande d'exécution après l'invocation d'une fonction / procédure / méthode de rappel, et interroge le gestionnaire de messages pour obtenir des messages en file d'attente.

8. Système selon la revendication 1, dans lequel le domaine de plate-forme comprend une plate-forme pour un terminal mobile pour un système de télécommunication sans fil.

9. Procédé pour transmettre des messages entre un domaine d'application (14) et un domaine de plate-forme (12), le domaine de plate-forme ayant un composant de logiciel (22) et un composant d'interface (26), ayant au moins une interface pour permettre à une application (14) ou un module dans le domaine d'application d'accéder au composant de logiciel, le procédé comprenant les opérations suivantes:
l'application ou le module dans le domaine d'application sélectionne soit un mode de rappel (252), soit un mode de message intégral (254), ou commute entre le mode de rappel et le mode de message intégral, les modes étant prévus pour recevoir des messages provenant du domaine de plate-forme ;
un gestionnaire de messages (232, 234) effectue un routage de messagerie conformément au mode sélectionné ;
**caractérisé en ce que**
l'application ou le module dans le domaine d'application commute à n'importe quel moment entre le mode de rappel et le mode de message intégral.

10. Procédé selon la revendication 9, dans lequel, si le mode de rappel est sélectionné, le procédé comprend en outre l'étape consistant à entrer dans le mode de rappel par le fait que l'application retourne la commande d'exécution au gestionnaire de messages après l'invocation d'une fonction / procédure / méthode de rappel.

11. Procédé selon la revendication 9, dans lequel si le mode de message intégral est sélectionné, le procédé comprend en outre l'étape consistant à entrer dans le mode de message intégral par le fait que l'application conserve la commande d'exécution après l'invocation d'une fonction / procédure / méthode de rappel et interroge le gestionnaire de messages pour obtenir des messages en file d'attente.

12. Procédé selon la revendication 9, dans lequel le domaine de plate-forme comprend une plate-forme pour un terminal mobile pour un système de télécommunication sans fil.

13. Mécanisme de transmission de messages pour transmettre des messages entre des premier et second composants de logiciel (12, 14), le mécanisme de transmission de messages comprenant :
un modèle de message (250) pour permettre à un des premier et second composants de logiciel de sélectionner un mode de rappel (252) ou un mode de message intégral (254), ou de commuter entre le mode de rappel et le mode de message intégral, les modes étant prévus pour recevoir des messages entre les premier et second composants de logiciel ;
un gestionnaire de messages (232, 234) pour effectuer un routage de messagerie conformément au mode sélectionné ;
**caractérisé en ce qu'**un des premier et second composants de logiciel peut commuter à n'importe quel moment entre le mode de rappel et le mode de message intégral.

14. Mécanisme selon la revendication 13, dans lequel le second composant de logiciel est dans un domaine de plate-forme qui inclut un composant d'interface comprenant une interface pour permettre au premier composant de logiciel d'accéder au second composant de logiciel, et dans lequel le gestionnaire de messages est inclus dans le composant d'interface.

15. Mécanisme selon la revendication 14, dans lequel:
le composant d'interface comprend une couche de services de logiciel médiateur ;
le gestionnaire de messages comprend un module de Noyau d'Applications Natives inclus dans la couche de services de logiciel médiateur ; et
le module de Noyau d'Applications Natives est adapté pour fonctionner comme un routeur.

16. Mécanisme selon la revendication 15, dans lequel le module de Noyau d'Applications Natives est inclus dans un domaine Open Platform API (OPA) de la couche de services de logiciel médiateur.

17. Mécanisme selon la revendication 13, dans lequel le support pour le modèle de message est inclus dans le domaine de plate-forme et est commandé par les modules dans le domaine d'application.

18. Mécanisme selon la revendication 13, dans lequel, si le mode de rappel est sélectionné, l'entrée dans le mode de rappel a lieu par le fait que l'application retourne la commande d'exécution au gestionnaire de messages après l'invocation d'une fonction / procédure / méthode de rappel.

19. Mécanisme selon la revendication 13, dans lequel si le mode de message intégral est sélectionné, l'entrée dans le mode de message intégral a lieu par le fait que l'application conserve la commande d'exécution après l'invocation d'une fonction / procédure / méthode de rappel, et interroge le gestionnaire de messages pour obtenir des messages en file d'attente.

20. Mécanisme selon la revendication 14, dans lequel le domaine de plate-forme comprend une plate-forme pour un terminal mobile pour un système de télécommunication sans fil.
